(19) Europäisches Patentamt European Patent Office Office européen des brevets

(11) **EP 4 692 870 A1**

(12) **EUROPEAN PATENT APPLICATION**

(43) Date of publication:
**11.02.2026 Bulletin 2026/07**

(21) Application number: **25184881.8**

(22) Date of filing: **24.06.2025**

(51) International Patent Classification (IPC):
**G02B 5/30** (2006.01)   **G02B 17/08** (2006.01)
**G02B 27/28** (2006.01)

(52) Cooperative Patent Classification (CPC):
**G02B 5/3083; G02B 5/3033; G02B 17/0856;
G02B 27/286**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.08.2024 CN 202411088759**

(71) Applicants:
• **Beijing Zitiao Network Technology Co., Ltd.
Beijing 100190 (CN)**
• **Lemon Inc.
Grand Cayman, KY1-1205 (KY)**

(72) Inventors:
• **BAI, Wenbin
Beijing, 100028 (CN)**
• **ZHANG, Ziyang
Los Angeles, 90066 (CN)**
• **YANG, Xingwei
Los Angeles, 90066 (CN)**
• **LIU, Guojun
Beijing, 100028 (CN)**
• **FU, Ling
Beijing, 100028 (CN)**
• **HU, Hsin-yi
Beijing, 100028 (CN)**

(74) Representative: **Grünecker Patent- und
Rechtsanwälte
PartG mbB
Leopoldstraße 4
80802 München (DE)**

(54) **OPTICAL STRUCTURE AND DISPLAY DEVICE**

(57) An optical structure and a display device are provided. The optical structure includes at least one lens, a transflective film, and a reflective polarizing layer. The at least one lens includes a first surface and a second surface; the transflective film is located at a side of the first surface away from the second surface; the reflective polarizing layer is located at a side of the second surface away from the first surface. The second surface is a curved surface, a compensation film is provided between the reflective polarizing layer and the second surface, and a first compensation film surface of the compensation film away from the second surface is a curved surface. The second surface includes a first region and a second region surrounding at least a portion of the first region, an optical axis of the at least one lens passes through the first region, and a distance between the first compensation film surface and a surface in the first region of the second surface is smaller than a distance between the first compensation film surface and a surface in the second region of the second surface. The optical structure realizes optical compensation of different degrees for different lens regions of the lens by adjusting the distance between the first compensation film surface and the second surface at different lens regions.

Fig. 1

## Description

TECHNICAL FIELD

Embodiments of the present disclosure relate to an optical structure and a display device.

BACKGROUND

At present, an optical system in Virtual Reality (VR) devices uses an ultrashort-focus folded optical path (Pancake), and optical components in the folded optical path, such as lenses, control and guide the propagation path of light. For example, the curved surface film application technology can be used to optimize the propagation path of light, reduce the optical distortion, improve the optical performance, obtain high-quality images, and then optimize the performance of display devices.

SUMMARY

Embodiments of the present disclosure provide an optical structure and a display device.

An embodiment of the present disclosure provides an optical structure, including at least one lens, a transflective film, and a reflective polarizing layer. The at least one lens includes a first surface and a second surface; the transflective film is located at a side of the first surface away from the second surface; the reflective polarizing layer is located at a side of the second surface away from the first surface. The second surface is a curved surface, a compensation film is provided between the reflective polarizing layer and the second surface, and a first compensation film surface of the compensation film away from the second surface is a curved surface. The second surface includes a first region and a second region surrounding at least a portion of the first region, an optical axis of the at least one lens passes through the first region, and a distance between the first compensation film surface and a surface in the first region of the second surface is smaller than a distance between the first compensation film surface and a surface in the second region of the second surface.

For example, according to an embodiment of the present disclosure, a maximum thickness of the compensation film at a position directly facing the first region is a first thickness, a maximum thickness of the compensation film at a position directly facing the second region is a second thickness, the second thickness is greater than the first thickness, and a difference between the second thickness and the first thickness is 2 microns to 20 microns.

For example, according to an embodiment of the present disclosure, the compensation film includes a light-transmitting adhesive layer.

For example, according to an embodiment of the present disclosure, a distance between a reflective surface of the reflective polarizing layer away from the second surface and the surface in the first region of the second surface is smaller than a distance between the reflective surface and the surface in the second region of the second surface.

For example, according to an embodiment of the present disclosure, the reflective surface and the first compensation film surface have a same surface shape.

For example, according to an embodiment of the present disclosure, the first compensation film surface is in contact with a surface of the reflective polarizing layer.

For example, according to an embodiment of the present disclosure, the optical structure further includes a phase retardation film located between the compensation film and the second surface. A surface of the phase retardation film away from the second surface is a phase retardation film surface, and a ratio of a distance between the phase retardation film surface and the surface in the first region of the second surface to a distance between the phase retardation film surface and the surface in the second region of the second surface is 0.95-1.05.

For example, according to an embodiment of the present disclosure, the phase retardation film surface and the second surface have a same surface shape.

For example, according to an embodiment of the present disclosure, the optical structure further includes a phase retardation film located at a side of the compensation film away from the second surface. The first compensation film surface is in contact with a surface of the phase retardation film, a surface of the phase retardation film away from the second surface is a phase retardation film surface, and the phase retardation film surface and the first compensation film surface have a same surface shape.

For example, according to an embodiment of the present disclosure, the optical structure further includes a phase retardation film located between the reflective polarizing layer and the second surface. The compensation film includes a first compensation film and a second compensation film, the first compensation film is located between the phase retardation film and the second surface, the second compensation film is located between the phase retardation film and the reflective polarizing layer, the first compensation film surface is a surface of the second compensation film facing towards the reflective polarizing layer, and the first compensation film surface is in contact with a surface of the reflective polarizing layer.

For example, according to an embodiment of the present disclosure, a surface of the first compensation film away from the second surface is a second compensation film surface, and a distance between the second compensation film surface and the surface in the first region of the second surface is smaller than a distance between the second compensation film surface and the surface in the second region of the second surface.

For example, according to an embodiment of the present disclosure, a surface shape of the second compensation film surface is different from a surface shape of the first compensation film surface.

For example, according to an embodiment of the present disclosure, a surface of the phase retardation film away from the second surface is a phase retardation film surface, and a surface shape of the phase retardation film surface is different from a surface shape of the second surface.

For example, according to an embodiment of the present disclosure, a surface of the compensation film facing towards the second surface is in direct contact with the second surface.

For example, according to an embodiment of the present disclosure, the first compensation film surface is an aspheric surface or a spherical surface, and the second surface is an aspheric surface or a spherical surface.

For example, according to an embodiment of the present disclosure, a ratio of distances between the first compensation film surface and respective positions at the surface in the first region of the second surface is 0.9 to 1.1.

For example, according to an embodiment of the present disclosure, a distance between the first compensation film surface and the surface in the second region of the second surface gradually increases in a direction pointing from a center of the first region to an edge of the first region.

For example, according to an embodiment of the present disclosure, the optical structure further includes a linear polarizing film located at a side of the reflective polarizing layer away from the transflective film.

Another embodiment of the present disclosure provides a display device, including a display screen and any one of the above-described optical structures, and the display screen is located at a side of the first surface away from the second surface.

The optical structure provided by the present disclosure realizes optical compensation of different degrees for different lens regions of the lens by adjusting the distance between the first compensation film surface and the second surface at different lens regions, enables the optical structure to realize finer contour adjustment in a limited space, improves the freedom and flexibility in the design of the optical structure, optimizes the performance of the optical structure, and improves the expansibility of the function of the optical structure, so that the optical structure can be applied to high-end applications and products requiring precise control of optical performance.

## BRIEF DESCRIPTION OF DRAWINGS

In order to explain the technical solutions of the embodiments of the present disclosure more clearly, the drawings of the embodiments will be briefly introduced below, and it is obvious that the drawings in the following description only relate to some embodiments of the present disclosure, and do not limit the present disclosure.

Fig. 1 is a schematic structural diagram of a curved surface film layer on lens.
Fig. 2 is a schematic diagram of a display device.
Fig. 3 is a schematic diagram of partial structure of an optical structure according to an embodiment of the present disclosure.
Fig. 4 is a schematic diagram of a planar projection of a second surface of the lens shown in Fig. 3.
Fig. 5A is a schematic diagram of distribution effect of compensable deviation on a second surface of a lens.
Fig. 5B is a schematic diagram of deviation distribution effect of a compensated reflective polarizing layer.
Fig. 5C is deviation distribution topography of the reflective polarizing layer shown in Fig. 5B.
Fig. 5D is a relationship curve between a virtual image distance and a field of view (FOV) for an optical structure before and after compensation.
Fig. 6 is a clarity curve of an optical structure before and after lens compensation.
Figs. 7 to 9 are schematic diagrams of an optical structure provided according to different examples of an embodiment of the present disclosure.
Fig. 10 is a schematic diagram of partial structure of a display device according to another embodiment of the present disclosure.

## DETAILED DESCRIPTION

In order to make the objectives, technical solutions, and advantages of the embodiments of the present disclosure clearer, the technical solutions of the embodiments of the present disclosure will be clearly and completely described below with reference to the drawings of the embodiments of the present disclosure. Obviously, the described embodiments are some embodiments of the present disclosure, but not all the embodiments. Based on the described embodiments of the present disclosure, all other embodiments obtained by those skilled in the art without creative effort fall within the scope of protection of the present disclosure.

Unless otherwise defined, technical terms or scientific terms used in the present disclosure should have the usual meaning understood by those of ordinary skill in the art to which the present disclosure belongs. The words such as "first" and "second" used in the present disclosure do not mean any order, quantity, or importance, but are merely used to distinguish different components. Similar words such as "comprising" or "including" mean that an element or item that appears before the word encompasses the element or item that appears after the word and its equivalents, and does not exclude other elements or items.

In the following embodiments of the present disclosure, unless otherwise specified, the quantity of a component may be one or more, or may be understood as at least one. "At least one" means one or more, and "a plurality of" means at least two.

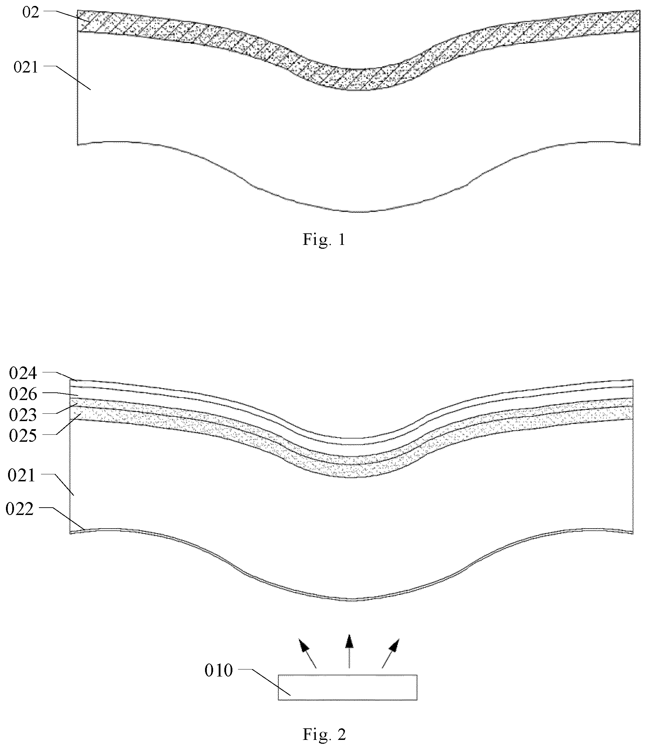

Fig. 1 is a schematic structural diagram of a curved surface film layer on lens. As shown in Fig. 1, the surface of the lens 021 is a curved surface, for example, an aspherical surface; and the film layer 02 is curved and attached to the curved surface of the lens 021.

Fig. 2 is a schematic diagram of a display device. As shown in Fig. 2, the display device includes a display screen 010 and an optical structure located at a light exiting side of the display screen 010. The optical structure includes a lens 021, a transflective film 022, a phase retardation film 023, a reflective polarizing layer 024, and adhesive layers 025 and 026. The transflective film 022 is located at a surface of the lens 021 facing towards the display screen 010; the phase retardation film 023 and the reflective polarizing layer 024 are located at the side of the lens 021 away from the display screen 010; the phase retardation film 023 is adhered to the surface of the lens 021 by the adhesive layer 025, and the reflective polarizing layer 024 is adhered to the surface of the phase retardation film 023 by the adhesive layer 026. The film layer 02 shown in Fig. 1 may be an entirety of the phase retardation film 023, the reflective polarizing layer 024, and the adhesive layers 025 and 026 shown in Fig. 2, or any of the above film layers.

The folded optical path adopted in the above optical structure is based on the principle as below. A waveplate can be arranged at the light exiting side of the display screen 010, the image light emitted from the display screen is converted into right-handed circularly polarized light after passing through the waveplate, the right-handed circularly polarized light is incident on the transflective film 022, and the polarization state of the right-handed circularly polarized light remains unchanged after transmitting through the transflective film 022. The right-handed circularly polarized light reaches the phase retardation film 023, and the right-handed circularly polarized light incident on the phase retardation film 023 is converted into p-linearly polarized light, and the p-linearly polarized light is reflected, by the reflective polarizing layer 024, back to the phase retardation film 023, where a first reflection occurs. Then, the p-linearly polarized light is converted into right-handed circularly polarized light after passing through the phase retardation film 023, the right-handed circularly polarized light reaches the transflective film 022 and is reflected at the transflective film 022, where a second reflection occurs. Due to half-wave loss, the reflected light changes from right-handed circularly polarized light to left-handed circularly polarized light. The left-handed circularly polarized light is converted into s-linearly polarized light via the phase retardation film 023, and the s-linearly polarized light then exits towards the human eyes after transmitting through the reflective polarizing layer 024 and a linear polarizing film (not shown).

As shown in Fig. 2, the surface of the lens 021 can be an aspherical surface, and the complex curved surface shape can achieve precise control of light to correct aberrations and optimize the overall optical performance of the optical structure, thereby improving imaging quality. The general aspheric design adopts a global shape adjustment method, for example, the shape of the aspheric surface of the lens is adjusted according to a uniform standard to achieve the desired optical effect.

In the study, the inventors of the present application found that when different regions of the aspheric surface of the lens have different deviations compared to the ideal aspheric design, it is generally impossible to provide flexible deviation compensation for different regions of the lens. For example, it is impossible to effectively solve the problem of inconsistent imaging quality caused by the difference in optical performance between the central region and the edge region of the lens, thus affecting the display effect. For example, a lens formed by the traditional method of global shape adjustment has limitations when applied to some high-demand systems, such as systems requiring high imaging performance in the full field of view or systems with different requirements of optical performance for local area. For example, when a lens as described above is applied to a high-performance camera lens or a head-mounted display device, the central region and the edge region of the lens cannot be adjusted differently, and thus it is difficult to achieve optimum imaging quality in the entire field of view.

In addition, when the traditional method is used to realize complex curved surface design, it often requires high manufacturing cost and technical difficulty, thus limiting the application range and efficiency of the formed lens.

The present disclosure provides an optical structure and a display device. The optical structure includes at least one lens, a transflective film, and a reflective polarizing layer. The at least one lens includes a first surface and a second surface; the transflective film is located at a side of the first surface away from the second surface; the reflective polarizing layer is located at a side of the second surface away from the first surface. The second surface is a curved surface, a compensation film is arranged between the reflective polarizing layer and the second surface, and a first compensation film surface of the compensation film away from the second surface is a curved surface. The second surface includes a first region and a second region surrounding at least a portion of the first region, an optical axis of the at least one lens passes through the first region, and a distance between the first compensation film surface and a surface in the first region of the second surface is smaller than a distance between the first compensation film surface and a surface in the second region of the second surface.

The optical structure provided by the present disclosure realizes optical compensation of different degrees for different lens regions of the lens by adjusting the distance between the first compensation film surface and the second surface at different lens regions, enables the optical structure to realize finer contour adjustment in a limited space, improves the freedom and flexibility in the design of the optical structure, optimizes the performance of the optical structure, and improves the expansibility of the function of the optical structure, so that the optical structure can be applied to high-end applications and products requiring precise control of optical performance.

In addition, the optical structure provided by the present disclosure adjusts the optical performance of the optical structure through the compensation film, which reduces the requirement on the processing accuracy of the lens, reduces the dependence on precise manufacturing process, reduces the pressure of initial design and processing, reduces the difficulty of manufacturing, and provides an efficient way to optimize the optical performance of the optical structure.

Hereinafter, an optical structure and a display device provided by embodiments of the present disclosure will be described with reference to the drawings.

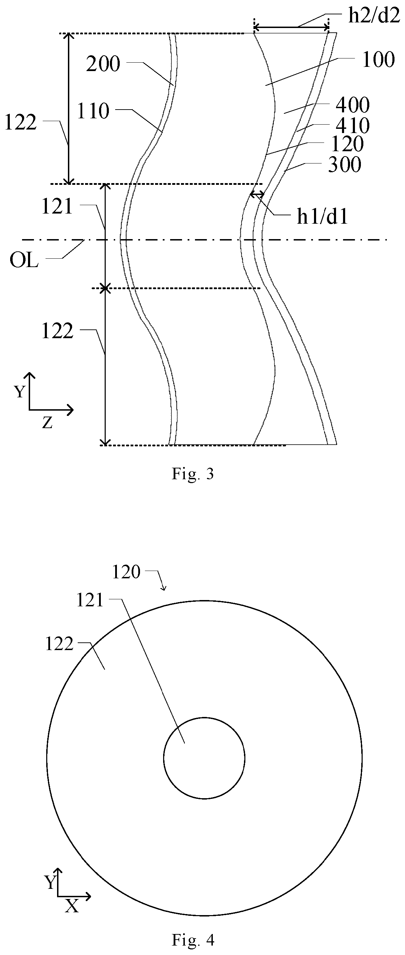

Fig. 3 is a schematic diagram of partial structure of an optical structure according to an embodiment of the present disclosure.

As shown in Fig. 3, the optical structure includes at least one lens 100, a transflective film 200, and a reflective polarizing layer 300. Fig. 3 schematically shows that the optical structure includes one lens 100, but the present disclosure is not limited thereto. The optical structure may include two lenses 100 or more lenses 100, which is not limited in the embodiment of the present disclosure, and the number of lenses 100 may be set according to product requirements.

As shown in Fig. 3, the at least one lens 100 includes a first surface 110 and a second surface 120. Fig. 3 schematically shows that the first surface 110 and the second surface 120 are two surfaces of the same lens 100, but the present disclosure is not limited thereto. The first surface 110 and the second surface 120 may be surfaces of different lenses 100.

As shown in Fig. 3, the transflective film 200 is located at the side of the first surface 110 away from the second surface 120. For example, the transflective film 200 may be arranged on the first surface 110. For example, the transflective film 200 may be plated on the first surface 110. Although not limited thereto, the transflective film 200 may be located on another surface of the lens 100, at the side of the first surface 110 away from the second surface 120.

For example, as shown in Fig. 3, the transflective film 200 is configured to transmit a portion of the light and reflect another portion of the light. For example, the transflective film 200 may include at least one film layer, such as a thickness of 10-200 nanometers per film layer. For example, the transmittance of the transflective film 200 may be 50%, and the reflectance may be 50%. For example, the transmittance of the transflective film 200 may be 60%, and the reflectance may be 40%. For example, the transmittance of the transflective film 200 may be 65%, and the reflectance may be 35%. The embodiments of the present disclosure are not limited thereto, and the transmittance and reflectance of the transflective film 200 can be set according to product requirements.

As shown in Fig. 3, the reflective polarizing layer 300 is located at the side of the second surface 120 away from the first surface 110. For example, the reflective polarizing layer 300 is located at the side of the second surface 120 away from the transflective film 200. For example, the reflective polarizing layer 300 may be adhered to the second surface 120 by an adhesive layer, or may be arranged on other surfaces of the lens 100, at the side of the second surface 120 away from the first surface 110, which is not limited in the embodiments of the present disclosure.

For example, as shown in Fig. 3, the reflective polarizing layer 300 may be a polarizing reflective film, and the reflective polarizing layer 300 is configured to reflect linearly polarized light of one characteristic and transmit linearly polarized light of another characteristic. For example, the reflective polarizing layer 300 functions as follows: there is a transmission axis direction in the plane of the film layer such that, the transmittance of the polarization component (e.g., s-linearly polarized light) of the incident light parallel to the transmission axis direction is greater than the transmittance of the polarization component (e.g., p-linearly polarized light) of the incident light perpendicular to the transmission axis direction, and the reflectance of the polarization component (e.g., s-linearly polarized light) of the incident light parallel to the transmission axis direction is smaller than the reflectance of the polarization component (e.g., p-linearly polarized light) of the incident light perpendicular to the transmission axis direction. For example, the reflective polarizing layer 300 may also be referred to as a polarization beam splitting film. For example, the transmittance of the polarized light parallel to the transmission axis direction of the reflective polarizing layer 300 is not less than 85%, such as not less than 90%, such as not less than 95%, such as not less than 98%; the reflectance of the polarized light perpendicular to the transmission axis direction of the reflective polarizing layer 300 is not less than 85%, such as not less than 90%, such as not less than 95%, such as not less than 98%.

For example, as shown in Fig. 3, the transflective film 200 and the reflective polarizing layer 300 serve as two reflective surfaces to provide an ultrashort-focus folded optical path (Pancake). For example, the arrangement of the transflective film 200 and the reflective polarizing layer 300 realizes the folding of light, so that the focal length of the original optical structure is folded due to the increase of, for example, two reflections introduced by the arrangement of the reflective polarizing layer 300 and the transflective film 200, thereby greatly compressing the required space between the human eye and the optical structure, and enabling the optical structure to be smaller and thinner.

As shown in Fig. 3, the second surface 120 of the lens 100 is a curved surface, a compensation film 400 is provided between the reflective polarizing layer 300 and the second surface 120, and the first compensation film surface 410 of the compensation film 400 away from the second surface 120 is a curved surface. For example, the second surface 120 and the first compensation film surface 410 are both concave surfaces, but not limited thereto, and the second surface 120 and the first compensation film surface 410 may both be convex surfaces. For example, a curved reflective polarizing layer 300 is attached onto the curved second surface 120.

Fig. 4 is a schematic diagram of a planar projection of a second surface of the lens shown in Fig. 3.

As shown in Figs. 3 and 4, the second surface 120 includes a first region 121 through which the optical axis of the at least one lens 100 passes, and a second region 122 surrounding at least a portion of the first region 121. For example, the optical axis is parallel to the Z direction. For example, when there is provided a plurality of lenses, the optical axes of the plurality of lenses overlap. For example, the first region 121 and the second region 122 may refer to two different regions on the second surface 120, which correspond to two different regions of the lens 100. For example, the first region 121 of the second surface 120 corresponds to a first lens region of the lens 100, and the first region 121 is located in the first lens region; the second region 122 of the second surface 120 corresponds to a second lens region of the lens 100, and the second region 122 is located in the second lens region.

For example, as shown in Figs. 3 and 4, the first region 121 may be a central region of the second surface 120, and the second region 122 may be an edge region of the second surface 120. For example, the second region 122 completely surrounds the first region 121. For example, the shape of the first region 121 may be circular shape, and the shape of the second region 122 may be annular shape, such as a circular ring shape. For example, the area of the second region 122 is larger than the area of the first region 121. For example, the optical axis passes through the circle center of the first region 121, and the optical axis passes through the center of the second region 122.

As shown in Fig. 3, the distance d1 between the first compensation film surface 410 and the surface in the first region 121 of the second surface 120 is smaller than the distance d2 between the first compensation film surface 410 and the surface in the second region 122 of the second surface 120.

The optical structure provided by the present disclosure realizes optical compensation of different degrees for different lens regions of the lens by adjusting the distance between the first compensation film surface and the second surface at different lens regions, enables the optical structure to realize finer contour adjustment in a limited space, improves the freedom and flexibility in the design of the optical structure, optimizes the performance of the optical structure, and improves the expansibility of the function of the optical structure, so that the optical structure can be applied to high-end applications and products requiring precise control of optical performance.

The optical structure provided by the present disclosure adjusts the optical performance of the optical structure through the compensation film, which reduces the requirement on the processing accuracy of the lens, reduces the dependence on precise manufacturing process, reduces the pressure of initial design and processing, reduces the difficulty of manufacturing, and provides an efficient way to optimize the optical performance of the optical structure.

The present disclosure provides a new optical compensation method applied to folded optical path, in which a compensation film is provided between a reflective polarizing layer and a lens, so that the surface shape of a surface for reflecting light in the reflective polarizing layer no longer depends on the curved surface of the lens, and the surface shape of the reflective polarizing layer is adjusted by the curved surface of the compensation film, thereby realizing the optimization of the folded optical path, which is beneficial to improving the performance of the optical structure.

In some examples, as shown in Fig. 3, the first compensation film surface 410 is in contact with the surface of the reflective polarizing layer 300. The foregoing expression "the first compensation film surface 410 is in contact with the surface of the reflective polarizing layer 300" means that these two surfaces are in direct contact.

In some examples, as shown in Fig. 3, the first compensation film surface 410 is an aspheric surface or a spherical surface, and the second surface 120 is an aspheric surface or a spherical surface. For example, the second surface 120 is a spherical surface, and the first compensation film surface 410 is a spherical surface. For example, the second surface 120 is an aspheric surface, and the first compensation film surface 410 is an aspheric surface. Since the first compensation film surface 410 is a compensation surface obtained by compensating the deviation of the second surface 120 from the ideal surface shape, the first compensation film surface 410 and the second surface 120 are the same type of surfaces, such as both spherical surfaces or both aspherical surfaces.

For example, an aspheric surface shape is represented by the following aspheric equation:

$$z = \frac{CY^2}{1+\sqrt{1-(1+k)C^2Y^2}} + \sum_{i=2}^{N} \alpha_i Y^{2i}.$$

In the above formula, the height of the aspheric surface along the direction perpendicular to optical axis is Y, and the distance from the vertex of the aspheric surface to the projection on the optical axis at the height Y of the aspheric surface is z, that is, z is the coordinate along the optical axis direction; C is the curvature (the reciprocal of curvature radius R), k is the conic constant, $\alpha_i$ is the coefficient of each higher-order term, and 2i is the order of aspherical coefficient.

For example, as shown in Fig. 3, the first compensation film surface 410 and the second surface 120 are both aspheric surfaces and have different surface shapes. For example, the first compensation film surface 410 and the second surface 120 have different curvatures; and/or the first compensation film surface 410 and the second surface 120 have different conic constants; and/or the first compensation film surface 410 and the second surface 120 have different coefficients of higher-order term.

In some examples, as shown in Fig. 3, the reflective surface 310 has the same surface shape as the first compensation film surface 410. The surface shape of the first compensation film surface 410 determines the surface shape of the reflective surface 310 for reflecting light in the reflective polarizing layer 300.

For example, as shown in Fig. 3, both the reflective surface 310 and the first compensation film surface 410 are aspherical surfaces. For example, the reflective surface 310 and the first compensation film surface 410 have the same curvature, the same conical constant, the same coefficient of higher-order term, and the like. In the present disclosure, the fact that the two surfaces have the same surface shape may refer to that the curvatures, the conical constants, the coefficients of higher-order term, and the like of the two surfaces are all the same.

The optical structure provided by the present disclosure realizes the compensation for surface shape of the second surface of the lens by setting the surface shape of the first compensation film surface to meet the surface shape required by the reflective surface in the reflective polarizing layer, and greatly reduces the difficulty of designing and manufacturing the second surface of the lens.

Referring to Fig. 2 and Fig. 3, the first region and the second region of the second surface correspond to the central region and the edge region of the lens, respectively. In the case where the edge region of the lens deviates from the ideal parameters (e.g., deviating from parameters such as ideal aspheric coefficients) more significantly, in the optical structure provided by the present disclosure, the distance between the first compensation film surface 410 and the surface in the second region 122 of the second surface 120 is adjusted to be greater than the distance between the first compensation film surface 410 and the surface in the first region 121 of the second surface 120, that is, the compensation film 400 is used to emphatically compensate the edge region of the lens 100, so that the surface shape of the first compensation film surface 410 is very close to the ideal surface shape in each region.

For example, the compensation for the second surface 120 of the lens 100 by the compensation film 400 may adjust the surface shape of the first compensation film surface 410 according to an aspheric equation and a compensation function, where the aspheric equation may be the above-described aspheric equation, and the compensation function is $Z(d)= a*f(d)$, where d is the distance between the second surface 120 and the ideal surface shape, f(d) represents a function of d, and a represents a compensation coefficient. f(d) is used to control the distribution and compensation degree of the compensation film 400. The central region of the lens 100 does not need compensation or requires less compensation, and the edge region of the lens 100 requires more compensation, then the value of f(d) corresponding to the central region of the lens 100 is equal to zero or is a relatively smaller one, and the value of f(d) corresponding to the edge region of the lens 100 is larger. a is used to describe the compensation efficiency of the compensation film 400. For example, f(d) may include a piecewise function or a continuous function. For example, f(d) may be a function that increases as d increases, and may be a function such as a linear function, a quadratic function, or an exponential function. For example, $f(d)=\beta*d$. For example, $f(d)=\beta*d^2$. For example, $f(d)=e^{\beta*d}$. In the above compensation function f(d), $\beta$ is a parameter. For example, when $0<d\leq d_{01}$, f(d)=0; when $d_{01}<d\leq d_{02}$, f(d) is a function such as the linear function, the quadratic function, or the exponential function describe above. Thus, the compensation for the second surface 120 of the lens 100 by the compensation film 400 can be achieved by a mathematical method, thereby optimizing the performance of the optical structure.

For example, the above-described compensation process may include: obtaining an ideal surface shape parameter; measuring the second surface and obtaining a compensation function based on a difference between the ideal surface shape parameter and a surface shape parameter of the second surface; obtaining a surface shape of the first compensation film surface according to the surface shape parameter of the second surface, the compensation function and an aspheric equation. For example, the above-described surface shape parameter may include a height of the aspheric surface in a direction perpendicular to the optical axis, a curvature, a conical constant, and the like.

For example, fabricating the compensation film 400 according to the surface shape of the first compensation film surface 410; measuring the second surface 120 of the lens 100, to obtain a difference between the second surface 120 and the ideal surface shape; measuring the surface of the reflective polarizing layer 300 formed at the side of the compensation film 400 away from the second surface 120, to obtain a difference between the surface of the reflective polarizing layer 300 and the ideal surface shape, and determining whether the difference is within a preset difference range.

For example, "measuring the second surface 120 of the lens 100, to obtain a difference between the second surface 120 and the ideal surface shape" described above may refer to obtaining the difference by using contact measurement or optical non-contact measurement. The present disclosure is not limited thereto, and the topography of the second surface 120 may also be measured by using a laser interferometer.

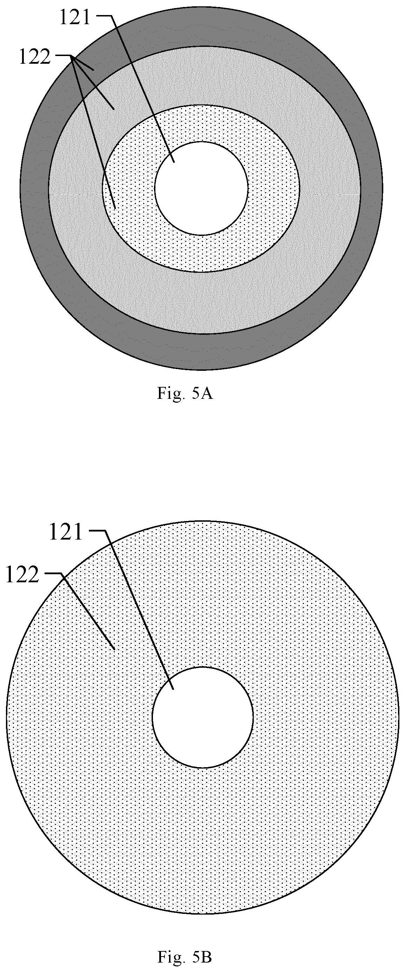

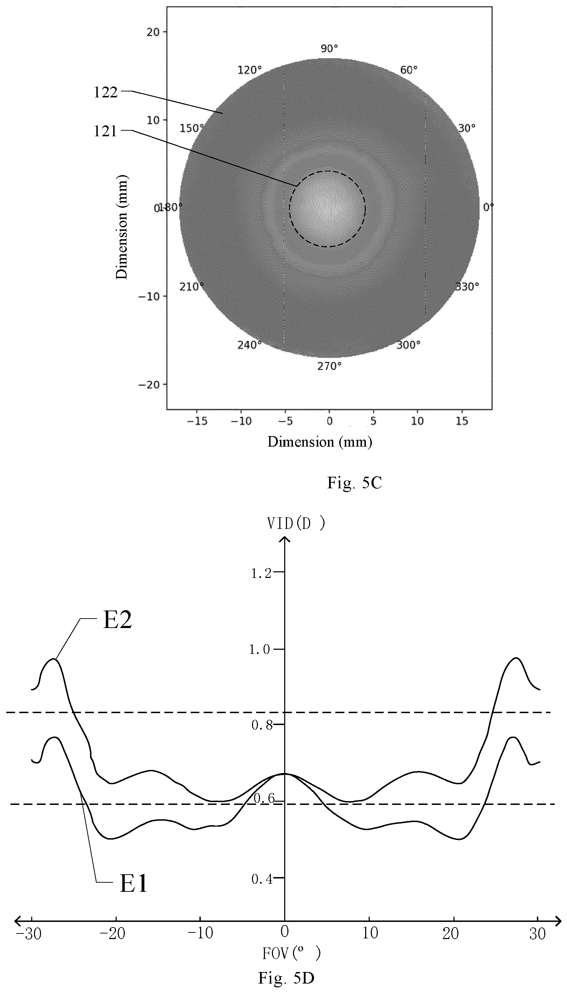

Fig. 5A is a schematic diagram of distribution effect of compensable deviation on a second surface of a lens. Fig. 5B is a schematic diagram of deviation distribution effect of a compensated reflective polarizing layer. Fig. 5C is deviation distribution topography of the reflective polarizing layer shown in Fig. 5B.

Fig. 5A shows the difference between the second surface 120 of the lens 100 and the ideal profile before compensation. As shown in Fig. 5A, the surface shape parameter of the surface in the first region 121 of the second surface 120 of the lens 100 is not much different from the surface shape parameter of the central region of the ideal aspheric surface, but the difference between the surface shape parameter of the surface in the second region 122 of the second surface 120 and the surface shape parameter of the edge region of the ideal aspheric surface gradually increases in a direction pointing from the center of the second surface 120 to the edge of the second surface 120. It can be seen that the second region 122 of the second surface 120 of the lens 100 is the region to be compensated.

Figs. 5B and 5C show the difference between the surface of the reflective polarizing layer 300 and the ideal surface shape after compensation. As shown in Figs. 5B and 5C, for the problem of considerable differences in surface shape parameter between the second region of the second surface 120 of the lens 100 and the ideal surface shape, a first compensation film surface 410 of the compensation film 400 is designed by the above-described compensation method, in which the first compensation film surface 410 of the compensation film 400 is a surface formed after compensating the second surface 120, and the design of the first compensation film surface 410 at a position directly facing the second region 122 of the second surface 120 achieves a good compensation effect on the second region 122 of the second surface 120, thereby greatly reducing the difference between the surface of the reflective polarizing layer 300 provided at the side of the first compensation film surface 410 away from the second surface 120 and the ideal surface shape.

For example, after bonding the reflective polarizing layer 300 and adjusting the distances between the compensation film 400 and the surfaces in different regions of the second surface 120, a compensation distribution verification and an optical performance analysis may be performed. For example, the compensation distribution verification includes: verifying whether the reflective surface of the reflective polarizing layer 300 is effectively compensated, such as whether the distance between the second surface 120 and the reflective surface of the reflective polarizing layer 300 corresponding to the second region 122 of the second surface 120 is significantly increased relative to the distance between the second surface 120 and the reflective surface of the reflective polarizing layer 300 corresponding to the first region 121 of the second surface 120. For example, the optical performance analysis includes: measuring the imaging quality and the optical aspheric coefficient of the second surface 120 of the lens 100 and the compensated reflective polarizing layer 300, respectively, and determining that the formed optical structure has good optical performance and satisfies the characteristics of the compensation film 400 and the compensation designing method provided by the present disclosure if the deviation curve formed by the difference between the surface shape parameter of the reflective polarizing layer 300 and the surface shape parameter of the second surface 120, from the center to the edge of the lens 100, satisfies the above compensation curve for designing the compensation film 400 according to the compensation function.

Fig. 5D is a relationship curve between a virtual image distance and a field of view (FOV) for an optical structure before and after compensation. E1 represents the relationship curve between the virtual image distance and the field of view for the optical structure before compensation, and E2 represents the relationship curve between the virtual image distance and the field of view for the optical structure after compensation.

For example, as shown in Fig. 5D, by providing the compensation film, it allows the virtual image distance (VID) imaged by the optical structure to satisfy a range of 0.59 to 0.83 diopters (D) at the field of view (FOV) of $\pm$ 20 degrees. Thus, by providing the compensation film in the optical structure, the embodiment of the present disclosure can ensure that the imaging quality and the optical performance of the optical structure meet the design requirements, thereby effectively controlling the VID within the prescribed optical specification range.

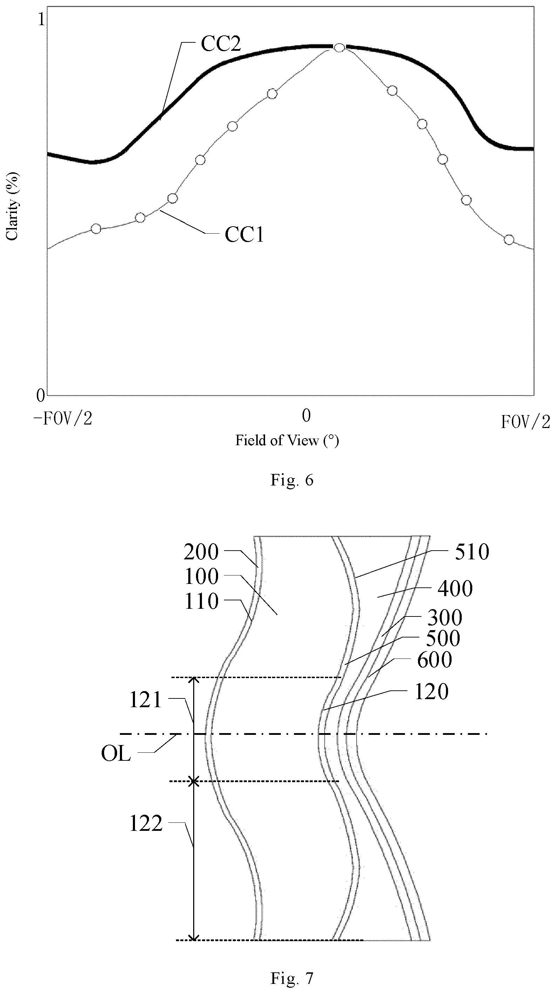

Fig. 6 is a clarity curve of an optical structure before and after lens compensation.

As shown in Fig. 6, CC1 represents a clarity curve of the optical structure before compensation of the lens 100, and CC2 represents a clarity curve of the optical structure after the lens 100 is compensated by adjusting the distance relationship between the first compensation film surface 410 and the second surface 120. As can be seen from Fig. 6, after adjusting the different distances between the first compensation film surface 410 and the surfaces in the first region 121 and second region 122 of the second surface 120, the clarity is significantly improved. Fig. 6 schematically shows that the vertical coordinate represents the unit of clarity in percentage, but the present disclosure is not limited thereto, and the vertical coordinate may represent the unit of clarity in lp/mm (line pairs per millimeter).

In some examples, as shown in Fig. 3, the compensation film 400 includes a light-transmitting adhesive layer. The fabrication of the compensation film 400 may include: after adhering the compensation film 400 onto the surface of the reflective polarizing layer 300, adhering the reflective polarizing layer 300 and the compensation film 400 onto the second surface 120 together, and stretching the size of the compensation film 400 at the position directly facing the second region 122 of the second surface 120 along the optical axis direction according to a value to be compensated in the second region 122, such as a compensation curve, to adjust the distance between the first compensation film surface 410 and the surface in the second region 122 of the second surface 120, so that the first compensation film surface 410 is distributed in a predetermined way and approaches the ideal surface shape. In this way, the parameters of the reflective surface of the reflective polarizing layer 300 infinitely approach the parameter range of the ideal reflective surface. The compensation design of the present disclosure is realized by using a mathematical model and a distance-related compensation function, and even if there are inevitable deviations in the actual fabrication process, the optical structure still can maintain high performance.

For example, as shown in Fig. 3, the compensation film 400 includes an optical adhesive. For example, the compensation film 400 includes an OCA (Optically Clear Adhesive) optical adhesive.

In some examples, as shown in Fig. 3, the maximum thickness of the compensation film 400 at the position directly facing the first region 121 is the first thickness h1, the maximum thickness of the compensation film 400 at the position directly facing the second region 122 is the second thickness h2, the second thickness h2 is larger than the first thickness h1, and the difference between the second thickness h2 and the first thickness h1 is 2 to 20 microns.

By adjusting the maximum thickness of the compensation film at positions directly facing different regions, the second surface of the lens can be compensated, the surface shape of the first compensation film surface can be adjusted to approach the ideal surface shape, and hence the surface shape of the reflective surface of the reflective polarizing layer can be adjusted to approach the ideal surface shape, thereby improving the performance of the optical structure.

For example, as shown in Fig. 3, the difference between the second thickness h2 and the first thickness h1 is 3 to 18 microns. For example, the difference between the second thickness h2 and the first thickness h1 is 5 to 15 microns. For example, the difference between the second thickness h2 and the first thickness h1 is 7 to 12 microns. For example, the difference between the second thickness h2 and the first thickness h1 is 8 to 10 microns. Here, the difference between the second thickness h2 and the first thickness h1 will not be exemplified, and the difference between the second thickness h2 and the first thickness h1 may be other numerical values in the range from 2 to 20 microns.

For example, as shown in Fig. 3, the compensation film 400 may have different thicknesses at different positions directly facing the first region 121, and the position corresponding to the first thickness may be a position in the first region 121 close to the second region 122, such as a position where the first region 121 joins with the second region 122. For example, the compensation film 400 may have substantially the same thickness at different positions directly facing the first region 121, and the position corresponding to the first thickness may be any position of the first region 121. For example, the compensation film 400 has different thicknesses at different positions directly facing the second region 122, and the position corresponding to the second thickness may be the edge position of the compensation film 400 or another position between the edge of the compensation film 400 and the first region 121.

In some examples, as shown in Fig. 3, the distance between the reflective surface of the reflective polarizing layer 300 away from the second surface 120 and the surface in the first region 121 of the second surface 120 is smaller than the distance between the reflective surface and the surface in the second region 122 of the second surface 120. By designing the compensation film 400, the reflective surface of the reflective polarizing layer 300 can be compensated to approach the ideal surface shape.

For example, as shown in Fig. 3, the reflective polarizing layer 300 may have a uniform thickness, and the surface of the reflective polarizing layer 300 at the side facing towards the second surface 120 has a surface shape as same as that of the reflective surface of the reflective polarizing layer 300 at the side away from the second surface 120.

In some examples, as shown in Fig. 3, the ratio of the distances between the first compensation film surface 410 and respective positions at the surface in the first region 121 of the second surface 120 is 0.9-1.1. For example, the ratio of the thicknesses of the first compensation film surface 410 at respective positions directly facing the first region 121 of the second surface 120 is 0.95 to 1.05, for example, the thicknesses of the first compensation film surface 410 at respective positions directly facing the first region 121 of the second surface 120 are the same.

In some examples, as shown in Fig. 3, the distance between the first compensation film surface 410 and the surface in the second region 122 of the second surface 120 gradually increases in a direction pointing from the center of the first region 121 to the edge of the first region 121. For example, the intersection line of the first compensation film surface intersected by a plane passing through the optical axis may be a straight line or a curved line. The center of the first region 121 refers to the geometric center of the first region 121, and if the shape of the first region 121 is circular shape, the center is the center of the circle.

For example, as shown in Fig. 3, in a direction pointing from the center of the first region 121 to the edge of the first region 121, the thickness of a portion of the compensation film 400 directly facing the second region 122 gradually increases, to effectively compensate the surface shape parameter of the edge region of the lens.

In some examples, as shown in Fig. 3, the ratio of thicknesses of the compensation film 400 at different positions with the same distance from the optical axis is 0.95-1.05. For example, the thicknesses of the compensation film 400 at different positions with the same distance from the optical axis are the same.

Fig. 3 only schematically shows the compensation film 400, and does not show the other film layer(s) between the compensation film 400 and the second surface 120 or the other film layer(s) between the reflective polarizing layer 300 and the compensation film 400.

Figs. 7 to 9 are schematic diagrams of optical structures provided according to different examples of embodiments of the present disclosure. As shown in Figs. 7 to 9, the position of the compensation film 400 or the structure of the compensation film 400 is different in different examples.

In some examples, as shown in Fig. 7, the optical structure further includes a phase retardation film 500 between the compensation film 400 and the second surface 120. For example, the phase retardation film 500 is configured such that the transmitted light achieves a conversion between a circularly polarized state and a linearly polarized state. For example, the phase retardation film 500 may be a 1/4 waveplate. For example, the angle between the slow axis of the phase retardation film 500 and the transmission axis 300 of the reflective polarizing layer is 45 degrees.

Embodiments of the present disclosure are not limited thereto, and the phase retardation film may be located at the side of the reflective polarizing layer away from the transflective film, and the material of the phase retardation film may include liquid crystal polymer.

In some examples, as shown in Fig. 7, the surface of the phase retardation film 500 away from the second surface 120 is the phase retardation film surface 510, and the ratio of the distance between the phase retardation film surface 510 and the surface in the first region 121 of the second surface 120 to the distance between the phase retardation film surface 510 and the surface in the second region 122 of the second surface 120 is 0.95-1.05. For example, the distances between the phase retardation film surface 510 and the surfaces at various positions of the second surface 120 are the same. For example, the thicknesses of the phase retardation film 500 at various positions are the same. Fig. 7 omits the optical adhesive between the phase retardation film 500 and the second surface 120.

In some examples, as shown in Fig. 7, the phase retardation film surface 510 and the second surface 120 have the same surface shape.

In the example shown in Fig. 7, the compensation film 400 does not compensate the surface of the phase retardation film 500. The lens 100, the transflective film 200, the compensation film 400, and the reflective polarizing layer 300 in the optical structure shown in Fig. 7 may have the same features as the lens 100, the transflective film 200, the compensation film 400, and the reflective polarizing layer 300 in the optical structure shown in Fig. 3, which will not be described herein.

In some examples, as shown in Fig. 7, the optical structure further includes a linear polarizing film 600 located at a side of the reflective polarizing layer 300 away from the transflective film 200.

For example, as shown in Fig. 7, the transmission axis of the linear polarizing film 600 coincides with the transmission axis of the reflective polarizing layer 300, for example, the linear polarizing film 600 may be configured to further filter other stray light, allowing only the polarized light (e.g., s-linearly polarized light) transmitted through the linear polarizing film 600 to enter the human eye.

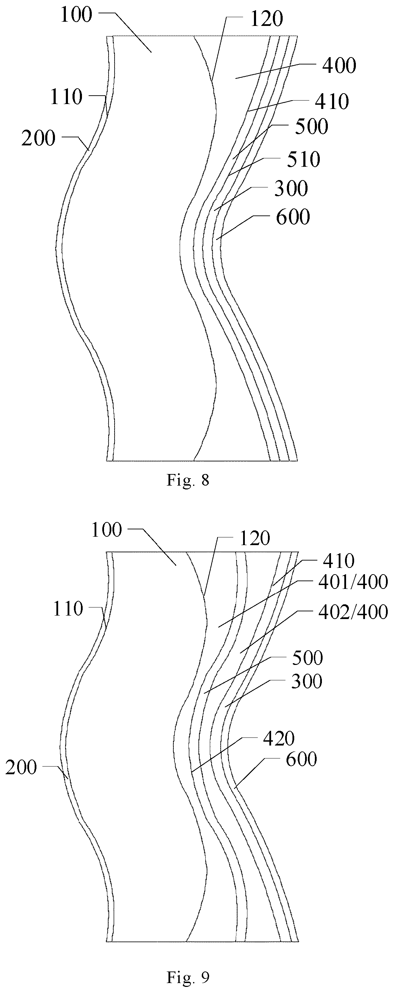

In some examples, as shown in Fig. 8, the phase retardation film 500 is located at the side of the compensation film 400 away from the second surface 120, the first compensation film surface 410 is in contact with the surface of the phase retardation film 500, the surface of the phase retardation film 500 away from the second surface 120 is the phase retardation film surface 510, and the phase retardation film surface 510 has the same surface shape as the first compensation film surface 410.

By positioning the compensation film between the phase retardation film and the second surface, not only the surface shape of the reflective surface of the reflective polarizing layer but also the surface of the phase retardation film is compensated.

For example, as shown in Fig. 8, the phase retardation film surface 510 and the reflective surface 310 have the same surface shape.

For example, as shown in Fig. 8, the compensation film 400 may be an optical adhesive through which the phase retardation film 500 is attached to the second surface 120, and the process of adjusting the topography of the optical adhesive may refer to the process of adjusting the topography of the optical adhesive attached to the reflective polarizing layer 300 described above.

For example, as shown in Fig. 8, the surface of the compensation film 400 close to the second surface 120 is in direct contact with the second surface 120.

Fig. 8 omits the optical adhesive between the phase retardation film 500 and the reflective polarizing layer 300, and the optical adhesive does not compensate the topography of the reflective surface of the reflective polarizing layer 300.

The transflective film 200, the lens 100, the reflective polarizing layer 300, the phase retardation film 500, and the linear polarizing film 600 shown in Fig. 8 may have the same features as the corresponding structures shown in Fig. 7. The compensation film 400 shown in Fig. 8 and the compensation film 400 shown in Fig. 7 have the same features except for different positions, and will not be repeated here.

In some examples, as shown in Fig. 9, the phase retardation film 500 is located between the reflective polarizing layer 300 and the second surface 120; the compensation film 400 includes a first compensation film 401 located between the phase retardation film 500 and the second surface 120, and a second compensation film 402 located between the phase retardation film 500 and the reflective polarizing layer 300; the first compensation film surface 410 is a surface of the second compensation film 402 facing towards the reflective polarizing layer 300, and the first compensation film surface 410 is in contact with the surface of the reflective polarizing layer 300.

In the optical structure provided in this example, the first compensation film and the second compensation film jointly compensate the reflective surface of the reflective polarizing layer, so as to adjust the surface shape of the reflective surface of the reflective polarizing layer to be approach the ideal surface shape.

In some examples, as shown in Fig. 9, the surface of the first compensation film 401 away from the second surface 120 is the second compensation film surface 420, and the distance between the second compensation film surface 420 and the surface in the first region 121 of the second surface 120 is less than the distance between the second compensation film surface 420 and the surface in the second region 122 of the second surface 120. For example, the surface shape of the second compensation film surface 420 is different from the surface shape of the second surface 120. For example, the second compensation film surface 420 is compensated, to some extent, with respect to the second surface 120.

For example, as shown in Fig. 9, both the first compensation film 401 and the second compensation film 402 are light-transmitting adhesive layers. For example, the materials of the first compensation film 401 and the second compensation film 402 may be the same or different.

For example, as shown in Fig. 9, the surface of the first compensation film 401 at the side close to the second surface 120 is in contact with the second surface 120, a second compensation film surface 420 of the first compensation film 401 is in contact with the phase retardation film 500, and the first compensation film 401 is an adhesive layer for adhering the phase retardation film 500 to the second surface 120. For example, the surface of the second compensation film 402 at the side close to the second surface 120 is in contact with the surface of the phase retardation film 500, the surface of the second compensation film 402 at the side away from the second surface 120 is in contact with the reflective polarizing layer 300, and the second compensation film 402 is an adhesive layer that adheres the reflective polarization layer 300 to the surface of the phase retardation film 500.

In some examples, as shown in Fig. 9, the surface of the phase retardation film 500 away from the second surface 120 is the phase retardation film surface 510, and the surface shape of the phase retardation film surface 510 is different from the surface shape of the second surface 120. For example, the phase retardation film surface 510 has the same surface shape as the second compensation film surface 420. The first compensation film 401 compensates the surface of the phase retardation film 500 to a certain extent, so that the surface shape of the surface of the phase retardation film 500 approaches the ideal surface shape relative to the second surface 120.

In some examples, as shown in Fig. 9, the surface shape of the second compensation film surface 420 is different from the surface shape of the first compensation film surface 410. When there is a larger deviation between the surface shape of the second surface 120 and the ideal surface shape, it is advantageous to improve the compensation accuracy by performing the surface shape compensation twice by the first compensation film 401 and the second compensation film 402.

For example, as shown in Fig. 9, the surface shape of the phase retardation film surface 510 is different from the surface shape of the reflective surface of the reflective polarizing layer 500.

The transflective film 200, the lens 100, the reflective polarizing layer 300, the phase retardation film 500, and the linear polarizing film 600 shown in Fig. 9 may have the same features as the corresponding structures shown in Fig. 7, and will not be described herein. The compensation film 400 shown in Fig. 9 and the compensation film 400 shown in Fig. 7 have the same features except for different positions, and will not be repeated here.

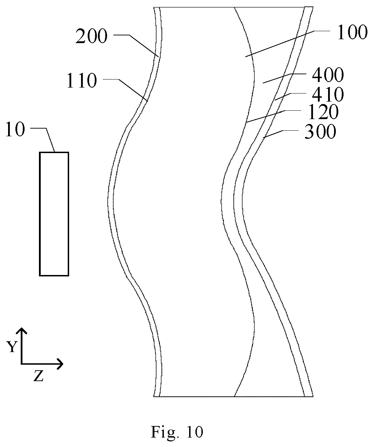

Fig. 10 is a schematic diagram of partial structure of a display device according to another embodiment of the present disclosure. As shown in Fig. 10, the display device includes a display screen 10 located at a side of the first surface 110 away from the second surface 120, and the optical structure in any of the examples described above. Fig. 10 schematically shows that the optical structure is the optical structure shown in Fig. 3, but the optical structure is not limited thereto, and the optical structure may be the optical structure shown in any one of Figs. 7 to 9.

As shown in Fig. 10, the optical structure is located at the display side of the display screen 10, and the transflective film 200 is located between the display screen 10 and the reflective polarizing layer 300.

For example, as shown in Fig. 10, the display surface of the display screen 10 is located in the focal plane at the light incident side of the optical structure.

For example, as shown in Fig. 10, the display screen 10 may be any type of display screen, such as a liquid crystal display screen, an inorganic light-emitting diode display screen, a quantum dot display screen, a projector (e.g., an LCOS micro projector), or the like.

For example, the display device may be a virtual reality (VR) display device. For example, the virtual reality display device may be a display device employing an ultra-short focal length folded optical path.

For example, the display device may be a near-eye display device, and the near-eye display device may be a wearable VR headset, VR glasses, or the like, and embodiments of the present disclosure are not limited thereto.

The following statements should be noted:

(1) The accompanying drawings involve only the structure(s) in connection with the embodiment(s) of the present disclosure, and other structure(s) can be referred to common design(s).
(2) In case of no conflict, features in one embodiment or in different embodiments can be combined.

The above description is merely exemplary embodiments of the present disclosure, and is not intended to limit the scope of protection of the present disclosure, which is determined by the appended claims.

## Claims

1. An optical structure, comprising:

   at least one lens, comprising a first surface and a second surface;
   a transflective film, located at a side of the first surface away from the second surface; and
   a reflective polarizing layer, located at a side of the second surface away from the first surface; wherein
   the second surface is a curved surface, a compensation film is arranged between the reflective polarizing layer and the second surface, and a first compensation film surface of the compensation film away from the second surface is a curved surface; and
   the second surface comprises a first region and a second region surrounding at least a portion of the first region, an optical axis of the at least one lens passes through the first region, and a distance between the first compensation film surface and a surface in the first region of the second surface is smaller than a distance between the first compensation film surface and a surface in the second region of the second surface.

2. The optical structure according to claim 1, wherein a maximum thickness of the compensation film at a position directly facing the first region is a first thickness, a maximum thickness of the compensation film at a position directly facing the second region is a second thickness, the second thickness is greater than the first thickness, and a difference between the second thickness and the first thickness is 2 microns to 20 microns.

3. The optical structure according to claim 1, wherein the compensation film comprises a light-transmitting adhesive layer.

4. The optical structure according to claim 1, wherein a distance between a reflective surface of the reflective polarizing layer away from the second surface and the surface in the first region of the second surface is smaller than a distance between the reflective surface and the surface in the second region of the second surface,
   preferably, the reflective surface and the first compensation film surface have a same surface shape.

5. The optical structure according to any one of claims 1-4, wherein the first compensation film surface is in contact with a surface of the reflective polarizing layer.

6. The optical structure according to claim 5, further comprising:

   a phase retardation film, located between the compensation film and the second surface, wherein
   a surface of the phase retardation film away from the second surface is a phase retardation film surface, and a ratio of a distance between the phase retardation film surface and the surface in the first region of the second surface to a distance between the phase retardation film surface and the surface in the second region of the second surface is 0.95-1.05,
   preferably, the phase retardation film surface and the second surface have a same surface shape.

7. The optical structure according to any one of claims 1-4, further comprising:

   a phase retardation film, located at a side of the compensation film away from the second surface, wherein
   the first compensation film surface is in contact with a surface of the phase retardation film, a surface of the phase retardation film away from the second surface is a phase retardation film surface, and the phase retardation film surface and the first compensation film surface have a same surface shape.

8. The optical structure according to any one of claims 1-4, further comprising:

a phase retardation film, located between the reflective polarizing layer and the second surface, wherein

the compensation film comprises a first compensation film and a second compensation film, the first compensation film is located between the phase retardation film and the second surface, the second compensation film is located between the phase retardation film and the reflective polarizing layer, the first compensation film surface is a surface of the second compensation film facing towards the reflective polarizing layer, and the first compensation film surface is in contact with a surface of the reflective polarizing layer,

preferably, a surface of the phase retardation film away from the second surface is a phase retardation film surface, and a surface shape of the phase retardation film surface is different from a surface shape of the second surface.

9. The optical structure according to claim 8, wherein a surface of the first compensation film away from the second surface is a second compensation film surface, and a distance between the second compensation film surface and the surface in the first region of the second surface is smaller than a distance between the second compensation film surface and the surface in the second region of the second surface,

preferably, a surface shape of the second compensation film surface is different from a surface shape of the first compensation film surface.

10. The optical structure according to any one of claims 1-4, wherein a surface of the compensation film facing towards the second surface is in direct contact with the second surface.

11. The optical structure according to any one of claims 1-4, wherein the first compensation film surface is an aspherical surface or a spherical surface, and the second surface is an aspherical surface or a spherical surface.

12. The optical structure according to any one of claims 1-4, wherein a ratio of distances between the first compensation film surface and respective positions at the surface in the first region of the second surface is 0.9 to 1.1.

13. The optical structure according to claim 12, wherein a distance between the first compensation film surface and the surface in the second region of the second surface gradually increases in a direction pointing from a center of the first region to an edge of the first region.

14. The optical structure according to any one of claims 1-4, further comprising:
a linear polarizing film, located at a side of the reflective polarizing layer away from the transflective film.

15. A display device, comprising a display screen and the optical structure according to any one of claims 1-14, wherein the display screen is located at the side of the first surface away from the second surface.

Fig. 1

Fig. 2

h2/d2

200

100

110

400
410
120
300

122

121

OL

h1/d1

122

Y

Z

Fig. 3

120

121

122

Y

X

Fig. 4

121

122

Fig. 5A

121

122

Fig. 5B

Fig. 5C

Fig. 5D

Fig. 6

Fig. 7

Fig. 8

Fig. 9

200

110

100

400
410
120
300

10

Y
Z

Fig. 10

Europäisches
Patentamt

European
Patent Office

Office européen
des brevets

# EUROPEAN SEARCH REPORT

Application Number

EP 25 18 4881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 666 128 A (BOE TECHNOLOGY GROUP CO LTD) 8 March 2024 (2024-03-08) | 1,3-5, 10-15 | INV. G02B5/30 G02B17/08 G02B27/28 |
| A | * abstract * * Paragraphs [0001], [0042], [0064], [0067], [0068], [0069], [0071], [0073], [0074], [0075], [0076], [0077], [0078], [0079], [0081], [0083], [0084] * * figures 1-8 * | 2,6-9 | |
| X | US 2023/418080 A1 (WANG YUANPENG [CN] ET AL) 28 December 2023 (2023-12-28) | 1 | |
| A | * abstract * * Paragraphs [0002], [0005], [0019], [0032], [0034], [0036], [0039], [0041], [0045] * * figures 1-8 * | 2,6-9 | |
| X | CN 118 276 315 A (BEIJING ZITIAO NETWORK TECHNOLOGY CO LTD; LIANMENG CO LTD) 2 July 2024 (2024-07-02) | 1 | |
| A | * abstract * * Paragraphs [0001], [0003], [0017], [0035], [0037], [0042], [0060], [0061] * * pages 1-15 * | 2,6-9 | TECHNICAL FIELDS SEARCHED (IPC) G02B |

The present search report has been drawn up for all claims

| Place of search | Date of completion of the search | Examiner |
|---|---|---|
| Munich | 8 December 2025 | Kienle, Philipp |

EPO FORM 1503 03.82 (P4C01)

## ANNEX TO THE EUROPEAN SEARCH REPORT
## ON EUROPEAN PATENT APPLICATION NO.

EP 25 18 4881

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | | Publication date | Patent family member(s) | | Publication date |
|---|---|---|---|---|---|
| CN 117666128 | A | 08-03-2024 | NONE | | |
| US 2023418080 | A1 | 28-12-2023 | CN | 117310981 A | 29-12-2023 |
| | | | US | 2023418080 A1 | 28-12-2023 |
| CN 118276315 | A | 02-07-2024 | CN | 118276315 A | 02-07-2024 |
| | | | WO | 2024139956 A1 | 04-07-2024 |

EPO FORM P0459

For more details about this annex : see Official Journal of the European Patent Office, No. 12/82